# EUROPÄISCHE PATENTSCHRIFT

(11) **EP 2 940 432 B1**
(45) Veröffentlichungstag und Bekanntmachung des Hinweises auf die Patenterteilung: **06.12.2017**
(21) Anmeldenummer: 15001077.5
(22) Anmeldetag: 15.04.2015
(51) Int. Cl.: G01D 5/22

(54) **WINKELSENSOR**
ANGLE SENSOR
CAPTEUR D'ANGLE

(30) Priorität: 02.05.2014 DE 102014006420
(43) Veröffentlichungstag der Anmeldung: 04.11.2015
(73) Patentinhaber: Diehl Defence GmbH & Co. KG, 88662 ÜBERLINGEN (DE)
(72) Erfinder: Kempas, Hagen, 88662 Überlingen (DE)
(74) Vertreter: Diehl Patentabteilung

(56) Entgegenhaltungen:
- DE-A1- 2 237 250
- US-A- 5 903 205
- US-A1- 2010 277 162
- US-B1- 6 566 862

## Beschreibung

Die Erfindung betrifft einen Winkelsensor umfassend einen den zu messenden Winkel vorgebenden Rotor, einen Magnetfelderzeuger und einen Stator mit zumindest einer Sensorspule, wobei der Magnetfelderzeuger so geformt und so zur Sensorspule angeordnet ist, dass das von ihm erzeugte Magnetfeld parallel zur Drehachse des Rotors durch die Sensorspule fließt.

Um Winkel zwischen zwei zueinander rotierenden Elementen zu messen, sind elektromagnetische Winkelsensoren bekannt, bei denen ein Magnetfelderzeuger ein Magnetfeld erzeugt und mit einem Rotor relativ zum Stator dreht und die Stellung des Magnetfelds von einer oder mehreren Sensorspulen des Stators abgetastet wird. Das Magnetfeld induziert in den Sensorspulen eine elektrische Spannung, aus der die Stellung des Magnetfelds beziehungsweise des Rotors relativ zum Stator ermittelt wird.

Aus der US 6 566 862 B1 ist ein Winkelsensor bekannt, bei dem ein Rotor eine exzentrische magnetische Scheibe trägt, die benachbart zu einem Stator mit Sensorspulen angeordnet ist. Die Achsen der Sensorspulen sind in Axialrichtung des Rotors ausgerichtet, so dass ein von ihnen erzeugtes Magnetfeld zur Exzenterscheibe weist und von dieser - in Abhängigkeit von deren Drehwinkel - beeinflusst wird. In der US 2010/0277162 A1 ist ein Winkelsensor beschrieben, bei dem eine exzentrische metallische Scheibe eines Rotors zwischen zwei Sensorspulen des Stators entlang bewegt wird und das Magnetfeld der Sensorspulen beeinflusst. Ein Winkelsensor mit mehreren Erregerspulen um mehrere Sensorspulen am Stator ist in der US 5 903 205 A beschrieben. Aus der DE 22 37 250 A ist ein Drehstellungswandler bekannt, bei dem der Magnetfelderzeuger eine innenliegende Erregerspule aufweist, die Teil des Stators ist.

Es ist eine Aufgabe der Erfindung, einen genau messenden Winkelsensor anzugeben.

Diese Aufgabe wird durch einen Winkelsensor gemäß den Merkmalen von Anspruch 1 gelöst.

Die Erfindung geht von der Überlegung aus, dass übliche Winkelsensoren an ihrem Rotor eine Schrägnutung aufweisen, die für die Linearität der Messung erforderlich ist. Bei einer hohen axialen Belastung von Rotor und Stator zueinander kann es zu einem Axialversatz der Bauteile zueinander kommen, der durch die Schrägnutung zu einer Ungenauigkeit der Winkelabtastung führt. Ein durch eine hohe mechanische Belastung ausgeschlagenes Axiallager führt daher zu einem systematischen Messfehler.

Dieser Nachteil kann durch die Erfindung umgangen werden, da das durch die Sensorspule fließende Magnetfeld in Axialrichtung des Winkelsensors ausgerichtet ist oder anders ausgedrückt das durch die Sensorspule fließende Magnetfeld parallel zur Drehachse des Rotors verläuft. Ein unerwünschter Axialversatz zwischen Rotor und Stator bezogen auf die Drehachse des Rotors führt daher zwar zu einer Verschiebung des Magnetfelds relativ zur Sensorspule, dies führt jedoch durch die Axialrichtung des Magnetfelds oder anders ausgedrückt durch den magnetischen Axialfluss durch die Sensorspule hindurch bezogen auf ihre Längsachse zu keinem beziehungsweise nur einem tolerierbaren Winkelfehler.

Der Rotor ist ein Winkel vorgebender Rotor und insofern mit einem Element verbindbar oder verbunden, dessen Winkelstellung relativ zum Stator gemessen werden soll. Der Magnetfelderzeuger umfasst eine Erregerspule zum Erzeugen des Magnetfelds und einen durch die Erregerspule geführten metallischen Kern zum Führen des Magnetfelds, der im Folgenden als Anker bezeichnet wird. Die Sensorspule setzt das Magnetfeld in ein elektrisches Signal um und kann mit einem Spannungssensor verbunden sein, der Teil des Winkelsensors sein kann, jedoch nicht sein muss. Rotor und Stator sind zweckmäßigerweise koaxial zueinander angeordnet, insbesondere bezogen auf die Drehachse des Rotors.

Das Magnetfeld fließt zweckmäßigerweise im Wesentlichen vollständig in Axialrichtung des Winkelsensors durch die Sensorspule, insbesondere fließt es bezogen auf die Längsachse der Sensorspule in Axialrichtung in die Sensorspule hinein und aus der Sensorspule heraus. Die magnetische Flussrichtung verläuft insofern zumindest im Wesentlichen in Axialrichtung durch die Sensorspule. Unter Axialrichtung des Winkelsensors wird vorliegend die Richtung des Winkelsensors verstanden, die parallel zur Drehachse eines der beiden zueinander rotierenden Elemente, deren Winkel zu messen ist, verläuft und damit auch mit dieser Drehachse zusammen fallen kann.

Vorteilhafterweise weist der Magnetfelderzeuger eine Magnetfeldaustrittsfläche und eine Magnetfeldeintrittsfläche auf, wobei die Magnetfeldaustrittsfläche, die Sensorspule und die Magneteintrittsfläche bezogen auf die Drehachse des Rotors hintereinander oder anders ausgedrückt in Axialrichtung des Winkelsensors hintereinander angeordnet sind. Das vom Magnetfelderzeuger erzeugte Magnetfeld kann in einfacher Weise in Axialrichtung durch die Sensorspule bezogen auf ihre Längsachse geführt werden, sodass ein unerwünschter Axialversatz des Rotors relativ zum Stator zu keinem oder nur zu einem tolerierbaren Winkelfehler führt. Vorteilhafterweise sind die Magnetfeldaustrittsfläche und die Magnetfeldeintrittsfläche einander zugewandt. Zweckmäßigerweise sind sie in Tangentialrichtung ausgerichtet.

In einer bevorzugten Ausführungsform weist der Magnetfelderzeuger einen das Magnetfeld führenden Anker auf, der sich bezogen auf die Drehachse des Rotors in Radialrichtung bis zumindest zum Kern der Sensorspule erstreckt. Es wird dabei von der Überlegung ausgegangen, dass der Rotor üblicherweise radial innerhalb des Stators liegt. Ein dadurch bedingter relativ kleiner Durchmesser des Rotors ist in Bezug auf eine hohe Genauigkeit der Winkelmessung nachteilig. Dieser Nachteil kann dadurch umgangen werden, indem der Anker nicht auf das Volumen innerhalb des Stators begrenzt ist, sondern über den innersten Bereich des Stators radial hinausragt. Ein ansonsten geringer Radius des Rotors kann hierdurch vergrößert werden, wodurch die Genauigkeit der Messung begünstigt wird. Zweckmäßigerweise sind der Anker und die Sensorspule bezogen auf die Axialrichtung des Winkelsensors zueinander ausgerichtet.

Der Magnetfelderzeuger weist eine Erregerspule auf, die Teil des Stators ist. Zweckmäßigerweise ist die Erregerspule parallel zur Drehachse des Rotors ausgerichtet. Eine besonders kompakte Bauweise des Winkelsensors kann erreicht werden, wenn die Erregerspule um die Drehachse des Rotors ausgerichtet ist. Dies kann beispielsweise durch einen scheibenförmigen Stator mit einem insbesondere kreisförmigen Durchbruch realisiert werden, bei dem die Erregerspule innerhalb des Durchbruchs angeordnet wird. Ein solcher Stator weist eine innenliegende Erregerspule bzw. der Magnetfelderzeuger damit eine innere Erregerspule auf, durch die zumindest ein Teil des Rotors hindurchführbar ist.

Außerdem ist der Magnetfelderzeuger mit einem durch die Erregerspule geführten metallischen, insbesondere ferromagnetischen Kern ausgestattet, der Teil des Rotors ist. Der Magnetfelderzeuger kann also aus einem Teil des Stators, nämlich der Erregerspule, und einem Teil des Rotors, nämlich dem insbesondere ferromagnetischen Kern beziehungsweise dem Anker bestehen. Ein derartiger Aufbau erlaubt einen Verzicht auf einen Übertragerstator und einen Übertragerrotor.

Der Magnetfelderzeuger umfasst einen Anker zum Führen des Magnetfelds der Erregerspule umfasst, der einen derart ausgestalteten Spalt aufweist, so dass das Magnetfeld im Spalt in Axialrichtung des Winkelsensors fließt oder, anders ausgedrückt, die Magnetfeldlinien im Spalt parallel zur Drehachse des Rotors verlaufen. Das Magnetfeld kann einfach und exakt ausgerichtet in Axialrichtung geführt werden. Vorteilhafterweise liegt die Sensorspule im Spalt des Ankers. Auf diese Weise kann das Magnetfeld genau ausgerichtet durch die Sensorspule geführt werden, also ein magnetischer Axialfluss durch die Sensorspule realisiert werden. Bei dem Spalt handelt es sich zweckmäßigerweise um einen Luftspalt, also einen mit Luft gefüllten Spalt.

Der Anker zum Führen des Magnetfelds einer Erregerspule weist zumindest ein Paar Ankerarme auf, die parallel zueinander und von der Drehachse des Rotors in Radialrichtung ausgerichtet sind. Das Magnetfeld kann in den Ankerarmen nach radial außen geführt und auf diese Weise zielgerichtet durch beispielsweise die Sensorspule geführt werden. Das Paar Ankerarme ist zweckmäßigerweise beidseitig des Stators angeordnet, der Stator beziehungsweise ein Teil davon liegt somit zwischen den Ankerarmen. Der Genauigkeit einer Winkelmessung ist es außerdem förderlich, wenn der Anker zwei Paare von Ankerarmen aufweist, wobei das zweite Paar antiparallel zum ersten ausgerichtet ist. Das Magnetfeld kann symmetrisch von radial innen durch den Anker und mittels der beiden Paare von Ankerarmen an beiden Seiten radial außen durch den Stator geführt werden. Es kann beispielsweise in einer Ausführungsform vorgesehen sein, dass ein Rotor bzw. der Anker mit den beiden Paaren von Ankerarmen so durch einen zentralen Durchbruch in einem scheibenförmigen, bevorzugt kreisscheibenförmigen Stator hindurch geführt ist, so dass der Stator zumindest teilweise zwischen den beiden Paaren von Ankerarmen liegt, welche in Bezug auf den Stator eine diametrale Anordnung aufweisen.

Da im Vergleich zu bekannten Winkelsensoren auf eine feine Nutung des Spulenkerns beziehungsweise Ankers verzichtet werden kann, ist es vorteilhaft, wenn die das Magnetfeld führenden Elemente des Magnetfelderzeugers homogen gehalten sind und beispielsweise vollständig aus Ferrit sind. Dies erleichtert die Herstellung des Magnetfelderzeugers. Insbesondere können also Anker und das Paar oder die beiden Paare von Ankerarmen aus Ferrit gefertigt sein.

Durch eine Trennung bzw. Verlegung der Erregerspule des Magnetfelderzeugers in den Stator und des Ankers beziehungsweise Kern des Magnetfelderzeugers in den Rotor kann der Rotor außerdem wicklungsfrei bleiben, wodurch die Herstellung des Rotors vereinfacht wird.

Eine weitere vorteilhafte Ausführungsform der Erfindung sieht vor, dass der Stator eine Scheibe aufweist, in der mehrere Sensorspulen um die um die Drehachse des Rotors bzw. die Rotorachse angeordnet sind. Ist die Scheibe beispielsweise kreisförmig, so bietet sich insbesondere eine kreisförmige Anordnung der Sensorspulen um die Rotorachse an. Auf diese Weise kann eine genaue Winkelmessung über einen größeren Winkelbereich erstreckt werden, insbesondere wenn der Anker zwei antiparallel zueinander ausgerichtete Paare von Ankerarmen umfasst. Vorteilhafterweise sind die Sensorspulen parallel zueinander und insbesondere in Axialrichtung des Winkelsensors bzw. parallel zur Drehachse des Rotors ausgerichtet.

Der Genauigkeit einer Winkelmessung ist es außerdem förderlich, wenn die Sensorspulen in zwei Gruppen angeordnet sind, die bezogen auf eine zur Drehachse des Rotors senkrechte Achse unsymmetrisch zueinander liegen. Im Fall eines eine - insbesondere kreisförmige - Scheibe umfassenden Stators mit kreisförmiger Anordnung der Sensorspulen um die Drehachse des Rotors können die Gruppen von Sensorspulen geometrisch gegeneinander versetzt angeordnet sein bezogen auf einen Anker mit zwei Paaren von antiparallel zueinander ausgerichtete Ankerarmen. Die beiden Paare von Ankerarmen können dadurch jeweils einen unterschiedlich großen Bereich von Spulen abdecken oder umgreifen, wodurch die Amplituden der Oberwellen im Signal des Winkelsensors reduziert werden können. Weiterhin können die Gruppen von Sensorspulen eine jeweils unterschiedliche Anzahl von mehreren Spulen umfassen.

Eine einfache Herstellung einer Sensorspule kann erreicht werden, wenn die Sensorspule eine Zylinderspule ist. Es ist keine Träufelwicklung notwendig und auf ein Einfügen der Spule in Nuten kann verzichtet werden.

Insbesondere beim Vorhandensein von mehreren Sensorspulen kann der Winkel in unterschiedlichen Weisen aus dem Signal der Sensorspulen erfasst werden. Eine Möglichkeit besteht im Anschluss einer elektronischen Auswerteeinrichtung an die Sensorspulen zur elektronischen Bestimmung des Winkels. Soll auf eine Elektronik in Sensornähe verzichtet werden, wie es beispielsweise in manchen technischen Bereichen gefordert ist, so kann der Winkelsensor als Mehrphasensensor ausgeführt sein. Unter einem Mehrphasensensor wird in diesem Zusammenhang ein Synchro-Sensor oder ein Resolver-Sensor verstanden. Während beim Synchro-Sensor drei Phasen mit einem Winkelversatz von 120° vorhanden sind, analog zu einem Drehstrommotor, verfügt der Resolver-Sensor über zwei Phasen, die 90° versetzt zueinander sind. Vorteilhafterweise ist der Winkelsensor ein elektromechanischer Synchro-Sensor. Auf diese Weise kann er an einfache und sehr robuste Auslesesysteme angeschlossen werden.

Vorteilhafterweise umfasst der Winkelsensor eine Synchroschnittstelle zum Abgreifen eines elektrischen Winkelsignals in Synchrodarstellung.

Insbesondere bei einer Ausführung des Winkelsensors als Mehrphasensensor ist es vorteilhaft, wenn der Winkelsensor mehrere Sensorspulen umfasst, die in ihrer Gesamtheit mit mehreren Phasen bewickelt sind. Zweckmäßigerweise trägt jede Sensorspule Wicklungsteile von mehreren Phasen. Hierdurch kann eine hohe Messgenauigkeit erreicht werden. Die Messgenauigkeit kann weiter gesteigert werden, wenn jede Sensorspule einen Wicklungsteil von jeder Phase trägt.

Mit gleichem Vorteil umfasst der Winkelsensor mehrere Sensorspulen, die in ihrer Gesamtheit mit mehreren Phasen bewickelt sind, wobei jede Phase in mehrere Wicklungsteile unterteilt ist, die auf mehrere Sensorspulen verteilt sind.

Je nach geometrischer Ausgestaltung des Ankers des Magnetfelderzeugers kann es zu Streufeldern des Ankers über eine oder mehrere Sensorspulen kommen. Ein solches Streufeld kann durch eine Kompensationsspule verringert werden, die mit der oder den Sensorspulen elektrisch verbunden ist. Zweckmäßigerweise ist die Kompensationsspule ein Teil des Stators und um die Erregerspule des Magnetfelderzeugers herumgeführt. Hierbei kann also die Kompensationsspule radial außerhalb der Erregerspule geführt sein, zweckmäßigerweise koaxial mit der Erregerspule und insbesondere koaxial mit der Drehachse des Rotors.

Die Erfindung betrifft außerdem ein Verfahren zum Messen eines Winkels gemäß den Merkmalen von Patentanspruch 15, bei dem ein Rotor eines Winkelsensors auf den zu messenden Winkel eingestellt wird, mittels eines Magnetfelderzeugers ein Magnetfeld erzeugt wird, das Magnetfeld mit einem Element des Rotors ausgerichtet wird, so dass das Magnetfeld parallel zur Drehachse des Rotors durch zumindest eine Sensorspule eines Stators des Winkelsensors fließt, und der Winkel anhand der mit dem Magnetfeld erzeugten Spannung in der zumindest einen Sensorspule ermittelt wird. Hierdurch wird ein ein magnetischer Axialfluss durch die Sensorspule hindurch bezogen auf ihre Längsachse ermöglicht, wodurch eine hohe Messgenauigkeit realisierbar ist.

Das Magnetfeld wird mittels einer Erregerspule des Stators erzeugt und mittels eines durch die Erregerspule geführten Ankers des Rotors zur Sensorspule geführt.

Die bisher gegebene Beschreibung vorteilhafter Ausgestaltungen der Erfindung enthält zahlreiche Merkmale, die in den einzelnen Unteransprüchen teilweise zu mehreren zusammengefasst wiedergegeben sind. Diese Merkmale können jedoch zweckmäßigerweise auch einzeln betrachtet und zu sinnvollen weiteren Kombinationen zusammengefasst werden. Insbesondere sind diese Merkmale jeweils einzeln und in beliebiger geeigneter Kombination sowohl mit dem erfindungsgemäßen Verfahren als auch mit der erfindungsgemäßen Vorrichtung gemäß den unabhängigen Ansprüchen kombinierbar. So sind Verfahrensmerkmale auch als Eigenschaft der entsprechenden Vorrichtungseinheit gegenständlich formuliert zu sehen und umgekehrt.

Die oben beschriebenen Eigenschaften, Merkmale und Vorteile dieser Erfindung, sowie die Art und Weise, wie diese erreicht werden, werden klarer und deutlich verständlich im Zusammenhang mit der folgenden Beschreibung der Ausführungsbeispiele, die im Zusammenhang mit den Zeichnungen näher erläutert werden. Die Ausführungsbeispiele dienen der Erläuterung der Erfindung und beschränken die Erfindung nicht auf die darin angegebene Kombination von Merkmalen, auch nicht in Bezug auf funktionale Merkmale. Außerdem können dazu geeignete Merkmale eines jeden Ausführungsbeispiels auch explizit isoliert betrachtet und mit einem beliebigen der Ansprüche kombiniert werden.

Es zeigen:
- FIG 1: ein Rotationselement an einem Gehäuse und einen Winkelsensor zum Messen der Winkelstellung des Rotationselements relativ zum Gehäuse,
- FIG 2: einen Teil des Stators des Winkelsensors mit einer Erregerspule und acht Sensorspulen,
- FIG 3: einen Rotor des Winkelsensors,
- FIG 4: einen Schnitt durch den Winkelsensor entlang der Schnittlinie IV-IV aus FIG 2,
- FIG 5: einen ähnlichen Winkelsensor in einer perspektivischen, teilgeschnittenen Ansicht,
- FIG 6: eine schematische Draufsicht auf den Winkelsensor aus FIG 5 mit Wicklungsangaben zu den elf Sensorspulen des Winkelsensors und
- FIG 7: ein Diagramm der Spannungen der Phasenausgänge des Winkelsensors aus FIG 6 über die Winkelstellung des Rotationselements relativ zum Gehäuse.

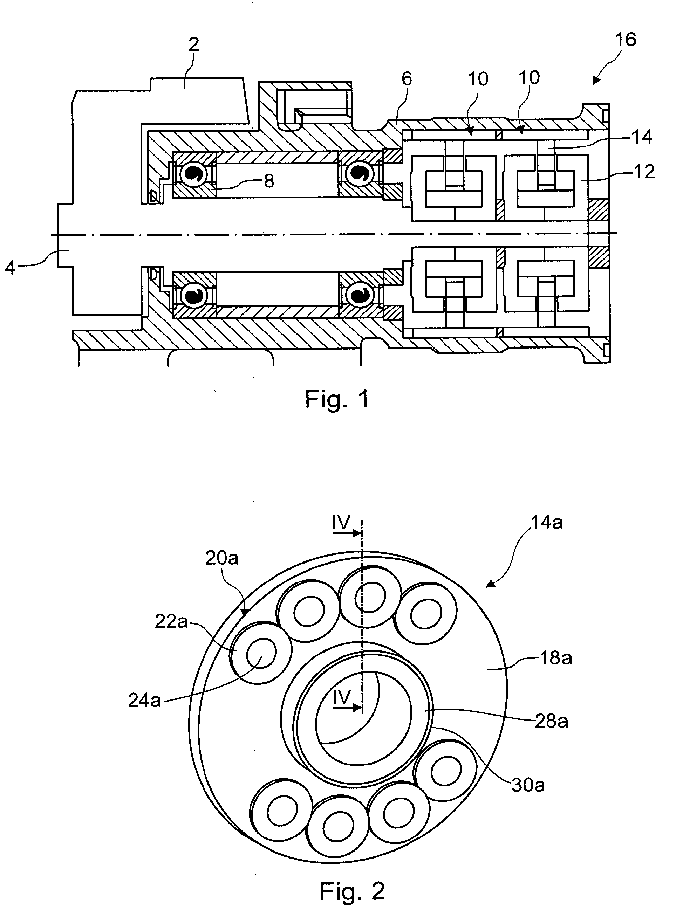

FIG 1 zeigt einen Ausschnitt eines Rotationselements 2, beispielsweise in Form einer Flap zum Steuern eines Großraumflugzeugs, das über eine Welle 4 in einem Gehäuse 6 über Lager 8 rotierbar befestigt ist. An der Welle 4 und dem Gehäuse 6 sind zwei Winkelsensoren 10 befestigt, und zwar in der Weise, dass jeweils der Rotor 12 eines jeden Winkelsensors 10 an der Welle 4 und der Stator 14 eines jeden Winkelsensors 10 am Gehäuse 6 fixiert ist. Der zu messende Winkel der Stellung des Rotationselements 2 zum Gehäuse 6 wird auf diese Weise auf den Rotor 12 relativ zum Stator 14 übertragen. Die Übertragung erfolgt in diesem Ausführungsbeispiel direkt und getriebefrei, sodass die Winkelstellung des Rotationselements 2 zum Gehäuse 6 exakt und identisch auf die Winkelstellung des Rotors 12 relativ zum Stator 14 übertragen wird.

FIG 1 stellt lediglich ein Ausführungsbeispiel der Erfindung dar und beschreibt eine Möglichkeit zur Anordnung eines Winkelsensors 10 an einem statischen Element, wie dem Gehäuse 6, und einem Rotationselement 2, das relativ zum statischen Element drehbar ist. Bei dem in FIG 1 gezeigten Ausführungsbeispiel ist die Winkelübertragung identisch, wobei auch eine Winkelübertragung über ein Getriebe möglich ist. Zur besonders sicheren und zuverlässigen Winkelmessung umfasst die Sensoranordnung 16 aus FIG 1 zwei Winkelsensoren 10, die redundant zueinander angeordnet sind. Dies ist jedoch für die Erfindung nicht notwendig. Auch die Darstellung der Winkelsensoren 10 ist in FIG 1 nur schematisch und kann konkret auf mehrere unterschiedliche Bauformen von Winkelsensoren 10a-c angewandt werden, die in den nachfolgenden Figuren gezeigt sind.

FIG 2 zeigt einen Teil eines Stators 14a eines wie zu FIG 1 beschriebenen Winkelsensors 10 in einer leicht abgewandelten Ausführungsform. Die nachfolgende Beschreibung beschränkt sich im Wesentlichen jeweils auf die Unterschiede zum jeweils vorangegangenen Ausführungsbeispiel, auf das bezüglich gleich bleibender Merkmale und Funktionen verwiesen wird. Um nicht bereits Beschriebenes mehrfach aufführen zu müssen, sind generell alle Merkmale eines vorangegangenen Ausführungsbeispiels im jeweils folgenden Ausführungsbeispiel übernommen, ohne dass sie erneut beschrieben sind, es sei denn Merkmale sind als Unterschiede zu den vorangegangenen Ausführungsbeispielen beschrieben. Zum einfacheren Verständnis sind außerdem gleiche Bauteile in verschiedenen Ausführungsbeispielen mit den gleichen Bezugsziffern und anderen Bezugsbuchstaben bezeichnet, wobei sie identisch zueinander oder mit geringfügigen Unterschieden, z.B. in Abmessung, Position und/oder Funktion zueinander sein können. Wird die Bezugsziffer alleine ohne einen Bezugsbuchstaben erwähnt, so sind die entsprechenden Bauteile aller Ausführungsbeispiele angesprochen.

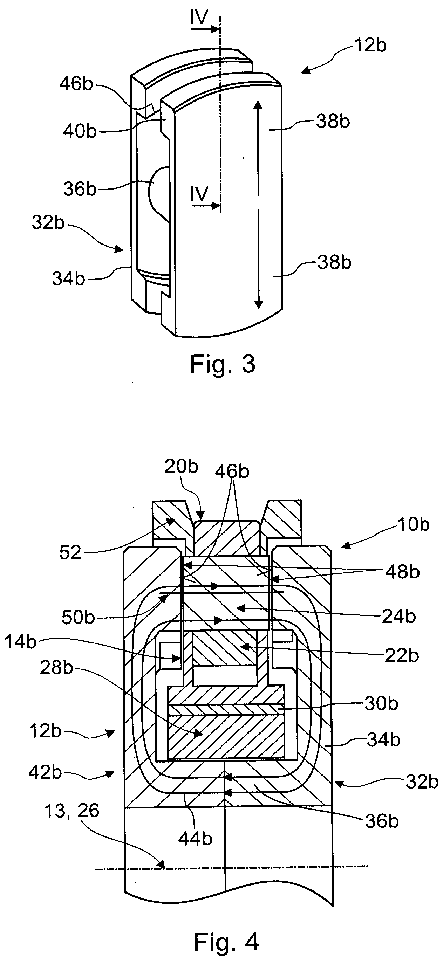

Der Stator 14a umfasst einen Statorträger 18a, in dem 2 x 4 Sensorspulen 20a befestigt sind. Die Sensorspulen 20a haben jeweils eine Wicklung 22a und einen ferromagnetischen Kern 24a, der durch die Wicklung 22a hindurchgeführt ist. Die Sensorspulen 20a sind konzentrisch zur Drehachse 26 (FIG 4) des Winkelsensors 10a angeordnet und in zwei Pakete aufgeteilt, die durch einen größeren wicklungsfreien Abstand im Stator 14a voneinander beabstandet sind, als die Sensorspulen 20a in den beiden Wicklungspaketen untereinander. Ebenfalls konzentrisch zur Drehachse 26 und radial innerhalb der Sensorspulen 20a angeordnet ist eine Erregerspule 28a. Radial außerhalb der Erregerspule 28a und ebenfalls konzentrisch zur Drehachse 26 ist eine Kompensationsspule 30a angeordnet. Die Drehachse 26 fällt mit der Drehachse 13 des Rotors 12 zusammen.

Eine mögliche Ausgestaltung des in FIG 1 allgemein dargestellten Rotors 12 ist in FIG 3 perspektivisch und in FIG 4 in einem Teilschnitt dargestellt. Der dort gezeigte Rotor 12b ist spulenlos und vollständig aus Ferrit hergestellt. Er ist als zweistückiger Anker 32b ausgebildet, bei dem jedes der beiden Ankerteile 34b die Hälfte des ferromagnetischen Kerns 36b der Erregerspule 28b bildet. Zusammen bilden die beiden Ankerteile 34b zwei Paar Ankerarme 38b. Die beiden Paare sind - ausgehend von der Drehachse 26 oder dem Kern 36b - zueinander antiparallel und in Radialrichtung ausgerichtet sind, wie durch die beiden Pfeile in FIG 3 gezeigt ist. Jeder der vier Ankerarme 38b ist an seinem radial äußeren Ende mit einer Verdickung 40b ausgeführt, wobei die Verdickungen 40b eines Ankerarmpaars zueinander weisen und zwischen sich einen Luftspalt bilden.

Die Anordnung des Rotors 12b relativ zum Stator 14b ist in FIG 4 dargestellt. FIG 4 zeigt einen Schnitt durch den Rotor 12b und den Stator 14b, wie in den Schnittlinie IV-IV aus Figuren 2 und 3 angedeutet ist. Generell bildet die Erregerspule 28 zusammen mit dem Anker 32 einen Magnetfelderzeuger 42, der ein Messmagnetfeld zum Erfassen der Winkelstellung des Rotors 12 relativ zum Stator 14 im Betrieb des Winkelsensors 10 erzeugt.

Das Magnetfeld 44b wird durch den Anker 32b bzw. dessen geometrische Ausgestaltung so zur Sensorspule 20b geführt, dass es in Axialrichtung, also parallel zur Drehachse 26, durch den ferromagnetischen Kern 24b der Sensorspule 20b fließt, wie durch Flusslinien des Magnetfelds 44b in FIG 4 angedeutet ist. Jeder Ankerarm 38b hat hierbei eine Magnetfeldein- bzw. -austrittsfläche 46b, durch die das Magnetfeld 44b im Wesentlich senkrecht und in Axialrichtung aus- bzw. eintritt. Auch der Rotorrückschluss 50b ist in Axialrichtung zwischen den beiden Ankerarmen 38b und durch die Sensorspule 20b geführt. Die Flächen 46b sind antiparallel zueinander angeordnet und weisen aufeinander zu. Zwischen den Flächen 46b ist der Kern 24b der Sensorspule 20b angeordnet. Zwischen Kern 24b und Ankerarm 38b ist jeweils ein Luftspalt 48b angeordnet.

Zu sehen ist in FIG 4 außerdem, dass der Kern 24b der Sensorspule 20b durch einen Statorträger 52 axial hindurch geführt ist, so dass er direkt den Luftspalt 48b begrenzt. Die Wicklung 22b der Sensorspule 20b hingegen ist axial innerhalb des Statorträgers 52 platziert, und hierdurch sicherer gegen Verschmutzung und Verschleiß gehalten.

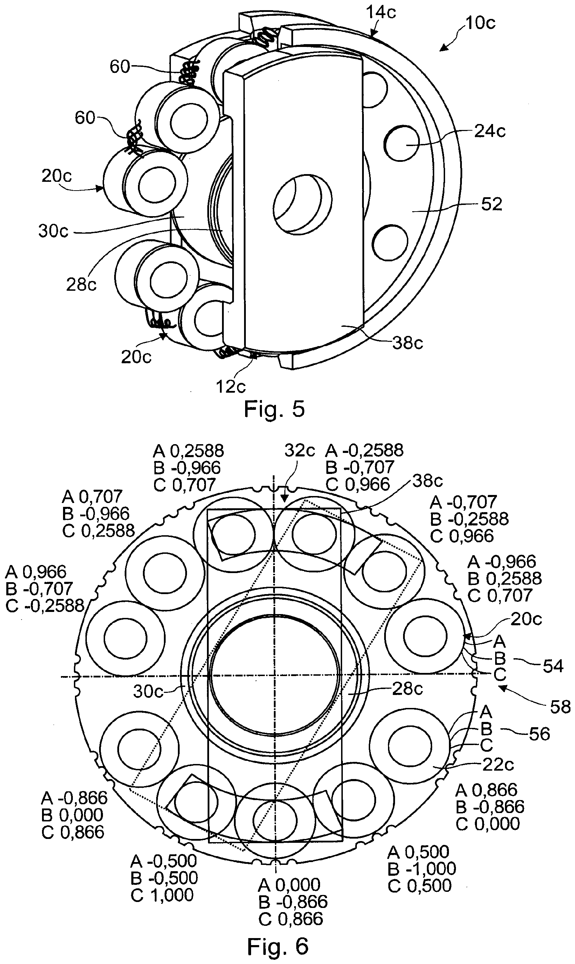

FIG 5 zeigt einen weiteren Winkelsensor 10c, der analog zum Winkelsensor 10b aufgebaut ist und auch als Winkelsensor 10 aus FIG 1 dienen könnte. Der Winkelsensor 10c ist in FIG 6 schematisch von der Seite gezeigt. In FIG 5 perspektivisch und FIG 6 von der Seite zu sehen ist jeweils die Erregerspule 28c und die Kompensationsspule 30c. Wicklungen 22c und ferromagnetische Kerne 24c sind wieder nur schematisch dargestellt. In FIG 6 ist der Anker 32c in zwei Stellungen angedeutet.

Im Unterschied zum Winkelsensor 10b aus den Figuren 3 und 4 umfasst der Winkelsensor 10c aus FIG 5 elf Sensorspulen 20c, die in zwei Gruppen mit sechs Sensorspulen 20c und fünf Sensorspulen 20c aufgeteilt sind. Bei dem in FIG 5 gezeigten Ausführungsbeispiel sind die beiden Gruppen von Sensorspulen 20c einander gegenüber liegend und bezogen auf die Drehachse 26 beziehungsweise Rotorachse unsymmetrisch zueinander angeordnet. Eine gedachte gerade Linie in Radialrichtung und durch die Drehachse 26 hindurch führend, die einen Kern 24c einer Sensorspule 20c mittig schneidet, verläuft somit zwischen zwei Sensorspulen 20c der gegenüberliegenden Gruppe oder durch den Randbereich einer Sensorspule 20c der gegenüberliegenden Gruppe. Dies gilt zweckmäßigerweise für alle Sensorspulen 20c beider Gruppen. Durch diese asymmetrische Aufteilung verbunden mit den zueinander symmetrischen Ankerarmen 38c kann der Signalverlauf einer Phase über den Drehwinkel homogenisiert und die Messung somit genau gehalten werden.

Wie auch schon im vorhergehenden Ausführungsbeispiel ist die tangentiale Breite eines Paars von Ankerarmen 38 größer ausgeführt als der tangentiale Abstand der Zentren der Kerne 24 der Sensorspulen 20 voneinander. Ein Ankerarmpaar 38 umgreift also beidseitig in manchen Winkelstellungen drei Sensorspulen 20, davon zwei zumindest teilweise. Selbstverständlich ist es auch möglich, die tangentiale Breite der Ankerarme 38 noch größer zu wählen, so dass noch mehr Sensorspulen 20 umgriffen werden. Auch hierdurch wird der Spannungsverlauf über den Drehwinkel homogenisiert und die Winkelmessung genau gehalten.

Während des Betriebs des Winkelsensors 10 wird eine Wechselspannung durch die Erregerspule 28 geführt. Hierdurch entsteht ein Magnetfeld 44, das durch den Kern 36 und axial parallel und radial antiparallel durch die beiden Paare von Ankerarmen 38 fließt. Das Magnetfeld 44 überbrückt die beiden Luftspalte 48 und bildet den Rotorrückschluss 50 durch mehrere Sensorspulen 20 in Axialrichtung. Durch die Wechselspannung wechselt das Magnetfeld 44 seine Feldrichtung periodisch mit der Wechselspannung, wodurch auch in den Wicklungen 22 der von den Ankerarmen 38 überdeckten Sensorspulen 20 eine Wechselspannung gleicher Frequenz induziert wird. Diese Spannung kann erfasst und aus ihr beziehungsweise aus ihnen bei mehreren betroffenen Sensorspulen 20 die Winkelstellung des Rotors 12 relativ zum Stator 14 ermittelt werden.

In einer ersten Ausführungsform sind die Wicklungen 22 der Sensorspulen 20 jeweils einzeln mit einer Auswerteelektronik verbunden. Aus der relativen Stärke der Spannungen in den Wicklungen 22 kann die Stellung des Rotors 12 zum Stator 14 ermittelt werden. Je stärker die Spannung ist, desto mehr überdeckt der Rotor 12 beziehungsweise das Ankerarmpaar 38 die betreffende Sensorspule 20.

Bei gleichmäßiger Anordnung der Sensorspulen 20 über den gesamten Umfang des Stators 14 kann die Winkelstellung des Rotors 12 rundum gemessen werden. Bei Ausführung der Ankerarme 38 wie in den Figuren 3 bis 6 gezeigt, besteht allerdings die Unsicherheit, welches Ankerarmpaar 38 die betreffende Spule 20 überdeckt, so dass nur der Winkelbereich über <180 Grad zweifelsfrei erkannt werden kann. Diese Unsicherheit kann jedoch ausgeräumt werden, wenn der Rotor 12 nur ein Ankerarmpaar 38 aufweist und das gegenüberliegende Ankerarmpaar beispielsweise aus einem magnetisch nicht leitenden Kunststoff etwa gleichen spezifischen Gewichts oder einem anderen geeigneten Material gefertigt ist. Das Magnetfeld 44 wird dann erheblich stärker über das magnetisch leitende Ankerarmpaar 38 geführt, so dass die Winkelstellung des Rotors 12 zweifelsfrei erkennbar ist. Auch durch eine asymmetrische Ausgestaltung der Ankerarmpaare 38, beispielsweise indem ein Ankerarmpaar 38 mehr Spulen 20 überdeckt als das andere Ankerarmpaar 38, kann die Absolutstellung des Rotors 12 zweifelsfrei erkannt werden.

Um eine robuste Auswertung möglichst ohne komplexe Auswerteelektronik zu erreichen, besteht außerdem die Möglichkeit, den Winkelsensor 10 als Mehrphasensensor auszuführen. Wie viele Phasen zur Anwendung kommen, hängt hierbei von der Bewicklung der Sensorspulen 20 ab. Im Folgenden wird die Ausführung des Winkelsensors 10 als Synchrosensor beschrieben, der mit drei jeweils 120° zueinander versetzten Phasen A, B, C arbeitet. In analoger Weise und anderer Bewicklung kann der Winkelsensor 10 jedoch auch als Resolversensor mit zwei Phasen oder zwei 2-Phasensystemen ausgeführt werden.

Ein vorteilhaftes Bewicklungssystem für einen Synchrosensor ist in FIG 6 angedeutet. Für jede Sensorspule 20c beziehungsweise Wicklung 22c ist ein Bewicklungsverhältnis der drei Phasen A, B, C angegeben. Wie in FIG 6 dargestellt ist, ist jede Sensorspule 20c mit mehreren Phasen A, B, C gewickelt, wobei jede Phase A, B, C auf mehrere Sensorspulen 20c verteilt ist. Die Sensorspulen 20c können also als Kette von hintereinander angeordnet und bewickelten Sensorspulen 20c verstanden werden, die einen Wicktungseingang 54 und einen Wicklungsausgang 56 aufweist. Jede der Phasen A, B, C verläuft also vom Wicklungseingang 54 durch alle oder zumindest der überwiegenden Teil der Sensorspulen 20c beziehungsweise Wicklungen 22c zum Wicklungsausgang 56, wie in FIG 6 angedeutet ist. Wicklungseingang 54 und Wicklungsausgang 56 liegen hierbei an benachbarten Sensorspulen 20c.

Je nach Wicklungsstärke der entsprechenden Phase A, B, C an einer Sensorspule 20c wird eine größere oder kleinere Spannung an dieser Sensorspule 20c an der entsprechenden Phase A, B, C induziert. FIG 6 zeigt zwei Stellungen des Ankers 32c beziehungsweise der Ankerarme 38c, eine durchgezogene und eine gepunktete Stellung. In der durchgezogenen Stellung wird die Phase A keine induzierte Spannung erfahren, da die untere, auf sechs Uhr angeordnete Sensorspule 20c keinen Wicklungsteil mit Phase A trägt. Dies ist in FIG 6 angegeben mit A 0,000. Die beiden um zwölf Uhr angeordneten oberen Sensorspulen 20c tragen zwar jeweils einen Wicklungsteil der Phase A, die Wicklungen sind jedoch in Bezug auf die Phase entgegengesetzt geführt, so dass sich die in diesen beiden Sensorspulen 20c induzierten Spannungen gegenseitig aufheben. Das Magnetfeld 44 auch durch dieses Ankerarmpaar 38 erzeugt also in Phase A keine Spannung. Entsprechend hat Phase A in dieser Winkelstellung einen Nulldurchgang.

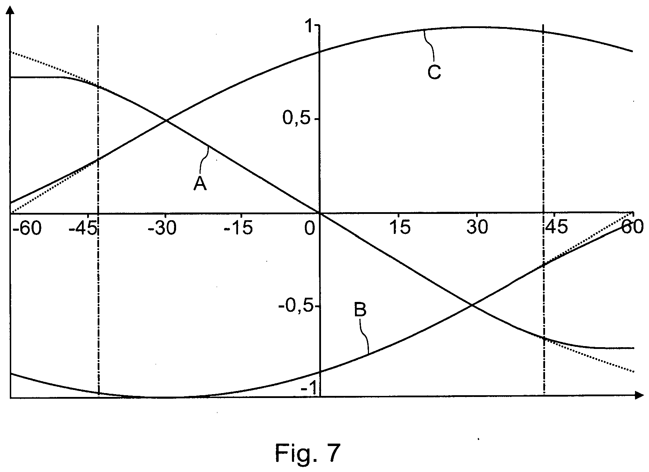

Der Spannungsverlauf der drei Phasen ist in FIG 7 wiedergegeben. Zu sehen ist, dass Phase A bei 0°, die der durchgezogenen Stellung des Ankers 32c in FIG 6 entspricht, Null ist. Phase A hat bei 0° also einen Nulldurchgang. Bei der gepunkteten Stellung des Ankers 32b in FIG 6 induziert das Magnetfeld 44 in Phase A jedoch eine Spannung, nämlich in der relativen Größe -0,5. Bei der auf etwa sieben Uhr gezeichneten Sensorspule 20c ist dies unmittelbar angegeben durch die Kennzeichnung A -0,500. Bei den beiden um etwa ein Uhr angeordneten Sensorspulen 20c beträgt der Wicklungsteil der Phase A -0,2588 beziehungsweise -0,707. Kombiniert führt das ebenfalls zu einer induzierten Spannung der relativen Stärke -0,5. Aus FIG 7 ist ablesbar, dass der Winkel des Ankers 32 in der gepunkteten Stellung 30 Grad beträgt.

Der vollständige Spannungsverlauf der Phase A über dem Messbereich ist in FIG 7 wiedergegeben. Gezeigt ist außerdem gestrichelt der Sollverlauf der Phase A, der bei etwa ± 45 Grad vom Istverlauf signifikant abweicht. Insofern beträgt der Messbereich des Winkelsensors 10c aus FIG 6 etwa ± 40 Grad.

In gleicher Weise sind die Sensorspulen 20c mit der Phase B und der Phase C gewickelt. Bei verschiedenen Winkelstellungen des Rotors 12c zum Stator 14c ergeben sich die entsprechenden Spannungen an der Phase B und der Phase C wie in FIG 7 dargestellt ist. Zusammen genommen ergeben die drei Phasen A, B, C im Messbereich ± 40 Grad die Spannungen einer Drehstrombewicklung beziehungsweise einer Synchro-Darstellung.

Die Kompensationsspule 30c umfasst drei Wicklungsteile, von denen jeweils genau einer mit einer der drei Phasen A, B, C verbunden ist. Durch Streustrahlung induzierte und zu Messfehlern führende Spannungen in den Phasen A, B, C werden durch die in der Kompensationsspule 30 induzierten Spannungen verringert.

Zum Auswerten des Winkels ist der Winkelsensor 10c daher vorteilhaft mit einer Synchro-Auswerteeinheit verbunden. Entsprechend umfasst der Winkelsensor 10c eine Synchro-Schnittstelle 58 in Verbindung mit einer entsprechenden Synchro-Auswerteeinheit.

Aus FIG 6 ist ersichtlich, dass die Sensorspulen 20c zusammenhängend bewickelt sind. Dies ist in FIG 5 veranschaulicht. Zu sehen sind Wickelübergänge 60, über die benachbarte Sensorspulen 20c miteinander verdrahtet sind. Der Wicklungsteil der Phasen A, B, C ist mit dem entsprechenden Wicklungsteil der gleichen Phase der benachbarten Sensorspule 20c usw. verbunden. Auf diese Weise bilden alle Sensorspulen 20c des Winkelsensors 10c eine miteinander verbunden Spulenkette, die vor der Montage des Winkelsensors 10c hergestellt und anschließend zur Montage in den Statorträger 52 eingelegt werden kann.

Die Herstellung von in den Figuren gezeigten Winkelsensoren 10 gestaltet sich sehr einfach. Die Spulenkette aus sämtlichen Sensorspulen 20 kann zunächst bewickelt werden, indem sämtliche Sensorspulen 20 zunächst mit der ersten Phase, dann mit der zweiten Phase und gegebenenfalls mit der dritten Phase bewickelt werden. Es entsteht so eine zusammenhängende Spulenkette. Der Rotor 12, der Statorträger 52 und die Erregerspule 28, gegebenenfalls mit Kompensationsspule 30, können ineinander gesteckt werden. Anschließend wird die Spulenkette von radial außen in den Statorträger 52 eingeschoben und durch das axiale Einschieben der Spulenkerne 24 im Statorträger 52 befestigt. Die Synchro-Schnittstelle 58 oder eine andere entsprechend der Bewicklung ausgeführte Schnittstelle ist nun frei zu legen und der Stator 14 kann durch Gießharz kompakt vergossen werden. Schließlich kann der Rotor 12 mit seinen beiden Rotorhälften axial beidseitig des Stators 14 eingesteckt und durch ein entsprechendes Befestigungsmittel zweckmäßigerweise formschlüssig verbunden werden, beispielsweise durch eine Verschraubung. Über die Schnittstelle 58 kann der Winkelsensor 10 anschließend mit der Auswerteeinheit verbunden werden.

### Bezugszeichenliste

- 2: Rotationselement
- 4: Welle
- 6: Gehäuse
- 8: Lager
- 10: Winkelsensor
- 12: Rotor
- 13: Drehachse des Rotors
- 14: Stator
- 16: Sensoranordnung
- 18: Statorträger
- 20: Sensorspule
- 22: Wicklung
- 24: Kern
- 26: Drehachse
- 28: Erregerspule
- 30: Kompensationsspule
- 32: Anker
- 34: Ankerteil
- 36: Kern
- 38: Ankerarm
- 40: Verdickung
- 42: Magnetfelderzeuger
- 44: Magnetfeld
- 46: Magnetfeldeintrittsfläche
- 48: Luftspalt
- 50: Rotorrückschluss
- 52: Statorträger
- 54: Wicklungseingang
- 56: Wicklungsausgang
- 58: Synchro-Schnittstelle
- 60: Wickelübergang

## Patentansprüche

1. Winkelsensor (10) umfassend einen den zu messenden Winkel vorgebenden Rotor (12), einen Magnetfelderzeuger (42) und einen Stator (14) mit zumindest einer Sensorspule (20), wobei der Magnetfelderzeuger (42) so geformt und so zur Sensorspule (20) angeordnet ist, dass das von ihm erzeugte Magnetfeld (44) parallel zur Drehachse (13) des Rotors (12) durch die Sensorspule (20) fließt,
**dadurch gekennzeichnet,**
**dass** der Magnetfelderzeuger (42) eine Erregerspule (28) aufweist, die Teil des Stators (14) ist, und einen durch die Erregerspule (28) geführten metallischen Anker (32) zum Führen des Magnetfelds (44) der Erregerspule (28) aufweist, der Teil des Rotors (12) ist, wobei der Anker (32)
a) einen derart ausgestalteten Spalt aufweist, so dass die Magnetfeldlinien des Magnetfelds (44) im Spalt parallel zur Drehachse (13) des Rotors (12) verlaufen, und
b) zumindest ein Paar Ankerarme (38) aufweist, die parallel zueinander und in Radialrichtung der Drehachse (13) des Rotors (12) ausgerichtet sind.

2. Winkelsensor (10) nach Anspruch 1,
**dadurch gekennzeichnet,**
**dass** der Magnetfelderzeuger (42) eine Magnetfeldaustrittsfläche (46) und eine Magnetfeldeintrittsfläche (46) hat und die Magnetfeldaustrittsfläche (46), die Sensorspule (20) und die Magnetfeldeintrittsfläche (46) bezogen auf die Drehachse (13) des Rotors (12) hintereinander angeordnet sind.

3. Winkelsensor (10) nach Anspruch 1 oder 2,
**dadurch gekennzeichnet,**
**dass** der Magnetfelderzeuger (42) einen das Magnetfeld (44) führenden Anker (32) aufweist, der sich bezogen auf die Drehachse (13) des Rotors (12) in Radialrichtung bis zumindest zum Kern (24) der Sensorspule (20) erstreckt.

4. Winkelsensor (10) nach einem der vorhergehenden Ansprüche,
**dadurch gekennzeichnet,**
**dass** die Erregerspule (28) parallel zur Drehachse (13) und um die Drehachse (13) des Rotors (12) ausgerichtet ist.

5. Winkelsensor (10) nach einem der vorhergehenden Ansprüche,
**dadurch gekennzeichnet,**
**dass** der Rotor (12) wicklungsfrei ist.

6. Winkelsensor (10) nach einem der vorhergehenden Ansprüche,
**dadurch gekennzeichnet,**
**dass** der Stator (14) eine Scheibe aufweist, in der kreisförmig um die Drehachse (13) des Rotors (12) mehrere Sensorspulen (20) angeordnet sind.

7. Winkelsensor (10) nach Anspruch 6,
**dadurch gekennzeichnet,**
**dass** die Sensorspulen (20) parallel zueinander und parallel zur Drehachse des Rotors (13) ausgerichtet sind.

8. Winkelsensor (10) nach Anspruch 7,
**dadurch gekennzeichnet,**
**dass** die Sensorspulen (20) in zwei Gruppen angeordnet sind, die bezogen auf eine zur Drehachse (13) des Rotors (12) senkrechte Achse unsymmetrisch zueinander liegen.

9. Winkelsensor (10) nach einem der vorhergehenden Ansprüche,
**gekennzeichnet**
**durch** seine Ausführung als elektromechanischer Synchrosensor.

10. Winkelsensor (10) nach einem der vorhergehenden Ansprüche,
**gekennzeichnet**
**durch** mehrere Sensorspulen (20), die in ihrer Gesamtheit mit mehreren Phasen (A, B, C) bewickelt sind, wobei jede Sensorspule (20) Wicklungsteile von mehreren Phasen (A, B, C) trägt.

11. Winkelsensor (10) nach Anspruch 10,
**dadurch gekennzeichnet,**
**dass** jede Sensorspule (20) einen Wicklungsteil von jeder Phase (A, B, C) trägt.

12. Winkelsensor (10) nach einem der vorhergehenden Ansprüche,
**gekennzeichnet**
**durch** mehrere Sensorspulen (20), die in ihrer Gesamtheit mit mehreren Phasen (A, B, C) bewickelt sind, wobei jede Phase (A, B, C) in mehrere Wicklungsteile unterteilt ist, die auf mehrere Sensorspulen (20) verteilt sind.

13. Winkelsensor nach einem der vorhergehenden Ansprüche,
**dadurch gekennzeichnet,**
**dass** der Magnetfelderzeuger (42) eine Erregerspule (28) und eine Kompensationsspule (30) aufweist, die mit der Sensorspule (20) elektrisch verbunden ist.

14. Winkelsensor (10) nach Anspruch 13,
**dadurch gekennzeichnet,**
**dass** die Kompensationsspule (30) koaxial um die Erregerspule (28) angeordnet ist.

15. Verfahren zum Messen eines Winkels, bei dem
- ein Rotor (12) eines Winkelsensors (10) auf den zu messenden Winkel eingestellt wird, mittels eines Magnetfelderzeugers (42) ein Magnetfeld (44) erzeugt wird,
- das Magnetfeld (44) mit einem Element des Rotors (12) ausgerichtet wird, so dass das Magnetfeld (44) parallel zur Drehachse des Rotors (12) durch zumindest eine Sensorspule eines Stators (14) des Winkelsensors (10) fließt, und
- der Winkel anhand der mit dem Magnetfeld (44) erzeugten Spannung in der zumindest einen Sensorspule (12) ermittelt wird,
**dadurch gekennzeichnet,**
**dass** das Magnetfeld (44) mit einer Erregerspule (28) erzeugt wird, die Teil des Stators (14) ist, und mittels eines durch die Erregerspule (28) geführten metallischen Ankers (32) des Magnetfelderzeugers (42) geführt wird, der Teil des Rotors (12) ist, wobei der Anker (32) zumindest ein Paar Ankerarme (38) aufweist, die parallel zueinander und in Radialrichtung der Drehachse (13) des Rotors (12) ausgerichtet sind, und einen derart ausgestalteten Spalt aufweist, so dass die Magnetfeldlinien des Magnetfelds (44) im Spalt parallel zur Drehachse (13) des Rotors (12) verlaufen.

## Claims

1. Angle sensor (10) comprising a rotor (12) predefining the angle to be measured, a magnetic field generator (42) and a stator (14) having at least one sensor coil (20), the magnetic field generator (42) being shaped and arranged in relation to the sensor coil (20) such that the magnetic field (44) generated thereby flows through the sensor coil (20) parallel to the axis of rotation (13) of the rotor (12),
**characterized in that**
the magnetic field generator (42) has an exciter coil (28) which is part of the stator (14), and has a metallic armature (32) led through the exciter coil (28) for guiding the magnetic field (44) of the exciter coil (28), which is part of the rotor (12), wherein the armature (32)
a) has a gap configured in such a way that the magnetic field lines of the magnetic field (44) in the gap extend parallel to the axis of rotation (13) of the rotor (12), and
b) has at least one pair of armature arms (38), which are aligned parallel to each other and in the radial direction of the axis of rotation (13) of the rotor (12).

2. Angle sensor (10) according to Claim 1,
**characterized in that**
the magnetic field generator (42) has a magnetic field exit surface (46) and a magnetic field entry surface (46), and the magnetic field exit surface (46), the sensor coil (20) and the magnetic field entry surface (46) are arranged one after another relative to the axis of rotation (13) of the rotor (12).

3. Angle sensor (10) according to Claim 1 or 2,
**characterized in that**
the magnetic field generator (42) has an armature (32) which guides the magnetic field (44) and which, relative to the axis of rotation (13) of the rotor (12), extends in the radial direction at least as far as the core (24) of the sensor coil (20).

4. Angle sensor (10) according to one of the preceding claims,
**characterized in that**
the exciter coil (28) is aligned parallel to the axis of rotation (13) and around the axis of rotation (13) of the rotor (12).

5. Angle sensor (10) according to one of the preceding claims,
**characterized in that**
the rotor (12) has no windings.

6. Angle sensor (10) according to one of the preceding claims,
**characterized in that**
the stator (14) has a disc in which a plurality of sensor coils (20) are arranged circularly around the axis of rotation (13) of the rotor (12).

7. Angle sensor (10) according to Claim 6,
**characterized in that**
the sensor coils (20) are aligned parallel to one another and parallel to the axis of rotation of the rotor (13).

8. Angle sensor (10) according to Claim 7,
**characterized in that**
the sensor coils (20) are arranged in two groups which, relative to an axis perpendicular to the axis of rotation (13) of the rotor (12), are located asymmetrically relative to one another.

9. Angle sensor (10) according to one of the preceding claims,
**characterized by**
its implementation as an electromechanical synchro sensor.

10. Angle sensor (10) according to one of the preceding claims,
**characterized by**
a plurality of sensor coils (20), which in their entirety are wound with multiple phases (A, B, C), wherein each sensor coil (20) carries winding parts of multiple phases (A, B, C).

11. Angle sensor (10) according to Claim 10,
**characterized in that**
each sensor coil (20) carries a winding part of each phase (A, B, C).

12. Angle sensor (10) according to one of the preceding claims,
**characterized by**
a plurality of sensor coils (20), which in their entirety are wound with multiple phases (A, B, C), wherein each phase (A, B, C) is subdivided into a plurality of winding parts, which are distributed to a plurality of sensor coils (20).

13. Angle sensor according to one of the preceding claims,
**characterized in that**
the magnetic field generator (42) has an exciter coil (28) and a compensation coil (30), which is connected electrically to the sensor coil (20).

14. Angle sensor (10) according to Claim 13,
**characterized in that**
the compensation coil (30) is arranged coaxially around the exciter coil (28).

15. Method for measuring an angle, in which
- a rotor (12) of an angle sensor (10) is set to the angle to be measured, a magnetic field (44) is generated by means of a magnetic field generator (42),
- the magnetic field (44) is aligned with an element of the rotor (12), so that the magnetic field (44) flows through at least one sensor coil of a stator (14) of the angle sensor (10), parallel to the axis of rotation of the rotor (12), and
- the angle is determined by using the voltage generated by the magnetic field (44) in the at least one sensor coil (12),
**characterized in that**
the magnetic field (44) is generated by an exciter coil (28) which is part of the stator (14), and is guided by means of a metallic armature (32) of the magnetic field generator (42) which is led through the exciter coil (28) and which is part of the rotor (12), wherein the armature (32) has at least one pair of armature arms (38) which are arranged parallel to one another and in the radial direction of the axis of rotation (13) of the rotor (12), and has a gap that is configured in such a way that the magnetic field lines of the magnetic field (44) in the gap extend parallel to the axis of rotation (13) of the rotor (12).

## Revendications

1. Capteur d'angle (10) comprenant un rotor (12) prédéterminant l'angle à mesurer, un générateur de champ magnétique (42) et un stator (14) comportant au moins une bobine de capteur (20), dans lequel le générateur de champ magnétique (42) est configuré et disposé par rapport à la bobine de capteur (20) de manière à ce que le champ magnétique (44) généré par celui-ci passe à travers la bobine de capteur (20) parallèlement à l'axe de rotation (13) du rotor (12), **caractérisé en ce que** le générateur de champ magnétique (42) comporte une bobine d'excitation (28) qui fait partie du stator (14), et comporte une armature métallique (32) guidée à travers la bobine d'excitation (28) pour guider le champ magnétique (44) de la bobine d'excitation (28), qui fait partie du rotor (12), dans lequel l'armature (32)
a) comporte un entrefer configuré de manière à ce que les lignes de champ magnétique du champ magnétique (44) passent dans l'entrefer parallèlement à l'axe de rotation (13) du rotor (12), et
b) comporte au moins une paire de bras d'armature (38) qui sont orientés parallèlement l'un à l'autre et dans la direction radiale de l'axe de rotation (13) du rotor (12).

2. Capteur d'angle (10) selon la revendication 1,
**caractérisé en ce que** le générateur de champ magnétique (42) comporte une surface de sortie de champ magnétique (46) et une surface d'entrée de champ magnétique (46) et **en ce que** la surface de sortie de champ magnétique (46), la bobine de capteur (20) et la surface d'entrée de champ magnétique (46) soient disposées les unes derrière les autres par rapport à l'axe de rotation (13) du rotor (12).

3. Capteur d'angle (10) selon la revendication 1 ou 2,
**caractérisé en ce que** le générateur de champ magnétique (42) comporte une armature (32) guidant le champ magnétique (44), laquelle armature s'étend en direction radiale au moins jusqu'au noyau (22) de la bobine de capteur (20) par rapport à l'axe de rotation (13) du rotor (12).

4. Capteur d'angle (10) selon l'une quelconque des revendications précédentes,
**caractérisé en ce que** la bobine d'excitation (28) est orientée parallèlement à l'axe de rotation (13) et autour de l'axe de rotation (13) du rotor (12).

5. Capteur d'angle (10) selon l'une quelconque des revendications précédentes,
**caractérisé en ce que** le rotor (12) est dépourvu d'enroulements.

6. Capteur d'angle (10) selon l'une quelconque des revendications précédentes,
**caractérisé en ce que** le stator (14) comporte un disque dans lequel plusieurs bobines de capteur (20) sont disposées de manière circulaire autour de l'axe de rotation (13) du rotor (12).

7. Capteur d'angle (10) selon la revendication 6,
**caractérisé en ce que** les bobines de capteur (20) sont orientées parallèlement les unes aux autres et parallèlement à l'axe de rotation du rotor (13).

8. Capteur d'angle (10) selon la revendication 7,
**caractérisé en ce que** les bobines de capteur (20) sont disposées en deux groupes qui sont agencés de manière asymétrique par rapport à un axe perpendiculaire à l'axe de rotation (13) du rotor (12).

9. Capteur d'angle (10) selon l'une quelconque des revendications précédentes,
**caractérisé par** une mise en oeuvre sous la forme d'un capteur synchrone électromécanique.

10. Capteur d'angle (10) selon l'une quelconque des revendications précédentes,
**caractérisé par** plusieurs bobines de capteur (20) qui sont enroulées dans leur ensemble avec plusieurs phases (A, B, C), dans lequel chaque bobine de capteur (20) porte des parties d'enroulement de plusieurs phases (A, B, C).

11. Capteur d'angle (10) selon la revendication 10,
**caractérisé en ce que** chaque bobine de capteur (20) porte une partie d'enroulement de chaque phase (A, B, C).

12. Capteur d'angle (10) selon l'une quelconque des revendications précédentes,
**caractérisé par** plusieurs bobines (20) qui sont enroulées dans leur ensemble avec plusieurs phases (A, B, C), dans lequel chaque phase (A, B, C) est subdivisée en plusieurs parties d'enroulement qui sont réparties sur plusieurs bobines de capteur (20).

13. Capteur d'angle selon l'une quelconque des revendications précédentes,
**caractérisé en ce que** le générateur de champ magnétique (42) comporte une bobine d'excitation (28) et une bobine de compensation (30) qui est reliée électriquement à la bobine de capteur (20).

14. Capteur d'angle (10) selon la revendication 13,
**caractérisé en ce que** la bobine de compensation (30) est disposée de manière coaxiale autour de la bobine d'excitation (28).

15. Procédé destiné à mesurer un angle, dans lequel
- un rotor (12) d'un capteur d'angle (10) est réglé sur l'angle à mesurer, et un champ magnétique (44) est généré au moyen d'un générateur de champ magnétique (42),
- le champ magnétique (44) est orienté au moyen d'un élément du rotor (12) de manière à ce que le champ magnétique (44) passe parallèlement à l'axe de rotation (12) à travers au moins une bobine de capteur d'un stator (14) du capteur d'angle (10), et
- l'angle est déterminé sur la base de la tension générée par le champ magnétique (44) dans l'au moins une bobine de capteur (12),
**caractérisé en ce que** le champ magnétique (44) est généré par une bobine d'excitation (28) qui fait partie du stator (14), et est guidé au moyen d'une armature métallique (32) du générateur de champ magnétique (42), qui est guidée à travers la bobine d'excitation (28), faisant partie du rotor (12), dans lequel l'armature (32) comporte au moins une paire de bras d'armature (38) qui sont orientés parallèlement l'un à l'autre et dans la direction radiale de l'axe de rotation (13) du rotor (12), et présente un entrefer configuré de manière à ce que les lignes de champ magnétique du champ magnétique (44) passent dans l'entrefer parallèlement à l'axe de rotation (13) du rotor (12).
